# EUROPEAN PATENT APPLICATION

(11) **EP 4 260 932 A1**
(43) Date of publication of application: **18.10.2023**
(21) Application number: 22168160.4
(22) Date of filing: 13.04.2022
(51) Int. Cl.: B01D 61/02, A23L 5/20, C12H 3/04

(54) **METHOD AND SYSTEM FOR REDUCING WATER CONSUMPTION IN A MEMBRANE DEALCOHOLIZATION PROCESS**

(71) Applicant: GEA Process Engineering A/S, 2860 Søborg (DK)
(72) Inventor: SCHEIBNER, Ralf, 76275 Ettlingen (DE)
(74) Representative: AWA Denmark A/S

(57) **Abstract**

The present invention relates to a method and system for reducing water consumption in a membrane dealcoholization process. The system comprises a dealcoholization section and a polishing section, where the polishing section comprises at least two membrane polishing units with recirculation of streams.

## Description

### Technical Field

The present invention relates to a method and system for reducing water consumption in a membrane dealcoholization process. The system comprises a membrane dealcoholization unit and a membrane polishing unit, where the membrane polishing unit comprises at least two reverse osmosis steps with recirculation of streams.

### Background Art

Membrane dealcoholization of beverages is a widely known process, and the demand for alcohol reduced or alcohol-free beverages has increased during the last years. An often-used technology used for removing alcohol from beverages is reverse osmosis. Reverse Osmosis represents state-of-the-art technology in liquid or water treatment. Reverse osmosis has earned its name as the most convenient and thorough method to filter water from unwanted constituents. It is used by most water bottling plants, and by many industries that require high quality water in manufacturing. Osmosis is the movement of a solvent through a semipermeable membrane (as of a living cell) into a solution of higher solute concentration that tends to equalize the concentrations of solute on the two sides of the membrane. In reverse osmosis this movement is counteracted by the application of a pressure. Dealcoholization using reverse osmosis is known to consume large amounts of water, also the waste product of the dealcoholization process, diluted alcohol, may be a valuable product for use in other applications. Therefore, many processes have been developed which in various ways try to recover alcohol from the discharged water and to recover water that has been used to remove alcohol from the beverage.

Since the efficiency of reverse osmosis is a process that depends on the solute concentration in the various fractions, it is challenging to find ways of obtaining both an efficient dealcoholization process while recovering as much alcohol as possible and being able to recover water or reduce the use of external water in an efficient manner, particularly time and energy efficient.

In WO 2019/178422 a number of solutions are described for recovering high concentration ethanol from the permeate water originating from a membrane dealcoholization process. The alcohol is obtained in high concentration using high pressure reverse osmosis to provide a retentate fraction, which can be further distilled to further increase the concentration of ethanol, as the alcohol product and a water permeate fraction.

In some embodiments the process is combined with a dealcoholization process where ethanol is removed from a beverage in two reverse osmosis steps followed by a high-pressure reverse osmosis step where ethanol in the permeate stream from the dealcoholization step is concentrated and water is recirculated to the dealcoholization process either from the high-pressure reverse osmosis process or from the dealcoholization process itself as part of the water used for the dealcoholization process.

However, it remains a challenge to provide further or improved processes for saving water in the membrane dealcoholization process, further or improved processes that do not compromise production time and quality of the products. Moreover, there is always a need for processes that provide the same or improved quality of products while being more energy efficient.

Therefore, it is an object of the present invention to solve one or more of the problems described above.

### Summary of the Invention

One or more of these problems are solved in a first aspect by the provision of a membrane dealcoholization and water reduction system said system comprising a dealcoholization section and a polishing section; in which the dealcoholization section comprises at least one membrane dealcoholization unit having a retentate and a permeate side, said membrane dealcoholization unit having a feed inlet positioned at the retentate side of the membrane dealcoholization unit, a retentate outlet a permeate outlet and a water inlet positioned at the retentate side of the membrane dealcoholization unit;
wherein the polishing section comprises at least two membrane polishing units, each having a retentate and a permeate side, in which a first membrane polishing unit has an inlet positioned at the retentate side of the unit, a retentate outlet and a permeate outlet, and in which a second membrane polishing unit has an inlet positioned at the retentate side of the unit, a retentate outlet and a permeate outlet; and
wherein the permeate outlet of the membrane dealcoholization unit is connected to the inlet of the first membrane polishing unit, the permeate outlet of the first membrane polishing unit is connected to the inlet of the second membrane polishing unit, and wherein the retentate outlet of the second membrane polishing unit is connected to the inlet of the first membrane polishing unit, and the permeate outlet of the second membrane polishing unit is connected to the water inlet of the membrane dealcoholization unit.

It is preferred that the at least two membrane polishing units are reverse osmosis units.

The presence of at least two membrane polishing units interconnected according to the invention has surprisingly proven to allow generation of clean water in large enough volumes within an acceptable time frame to render a feasible process. Thus, the time efficiency of the solution according to the invention is comparable to solutions using only external water without compromising the output, i.e. desired dealcoholization of a solution such as a beverage and the concurrent alcohol recovery. In comparison a solution with one polisher under same conditions would take at least 25% longer to achieve a similar result, as is shown in the appended figures.

According to embodiments of the invention the at least two membrane polishing units have a semipermeable membrane allowing water and alcohol to pass and wherein the units are configured to allow for an operating pressure in the range of 15 to 80 bar, preferably 30 to 60 bar, more preferred, 40 to 55 bar and further having a temperature control means allowing for a temperature of -5 to 15 °C, preferably -2 to 10 °C, more preferred -1 to 8 °C.

In further embodiments the membrane dealcoholization unit is a reverse osmosis unit having a semipermeable membrane allowing water and alcohol to pass, and optionally wherein the unit is configured to allow an operating pressure in the range of 10 to 45 bar, preferably 15 to 36 bar, and further having a temperature control means allowing for a temperature at or below 25 °C, preferably 10 to 20 °C.

In a preferred embodiment the permeate outlet of the second membrane polishing unit is connected to the water inlet of the membrane dealcoholization unit directly and/or via an intermediate buffer tank. Such configuration allows for a flexible operation of the system. During startup of the process, the amount of permeate water is limited due to the high concentration of solutes whereas during operation of the system enough permeate water is generated for the dealcoholization, such that the amount of external water added is minimized. The presence of the buffer tank thus allows for both a flexible operation but also further reduction of external water supply, particularly in the early phases of the process where the polishing process has not yet yielded a large amount of polished permeate. This is due to the fact that the configuration allows for collection of polished permeate from the preconcentration phase for use in the initial diafiltration phase of the dealcoholization process.

In another aspect the invention relates to a polishing section for use in a membrane dealcoholization and water reduction process, said polishing section comprises at least two membrane polishing units, where a first membrane polishing unit has an inlet positioned at the retentate side of the unit, a retentate outlet and a permeate outlet, and where a second membrane polishing unit has an inlet positioned at the retentate side of the unit, a retentate outlet and a permeate outlet;
wherein the inlet of the first membrane polishing unit is configured to be connected to a permeate outlet of a membrane dealcoholization unit, and
wherein the permeate outlet of the first membrane polishing unit is connected to the inlet of the second membrane polishing unit, and wherein the retentate outlet of the second membrane polishing unit is connected to the inlet of the first membrane polishing unit, and the permeate outlet of the second membrane polishing unit is configured to be connected to a water inlet of a membrane dealcoholization unit.

Thus, the membrane polishing unit may be retrofitted to existing dealcoholization plants in a simple manner thereby improving on water consumption without compromising the time spent, and at the same time providing a further valuable by-product in the form of concentrated alcohol. Details and variations described for the polishing section in relation to the combined system equally apply to the polishing section when used as a retrofit section.

In addition to a system the invention also provides a method for reducing water consumption in a membrane dealcoholization process, said method comprising the steps of
i) feeding a solution, such as a beverage product, comprising alcohol to a membrane dealcoholization unit to provide an alcohol reduced solution and an alcohol containing permeate;
ii) feeding the alcohol containing permeate obtained in step i) to the retentate side of a first membrane polishing unit to provide an alcohol enriched retentate and an alcohol depleted permeate;
iii) feeding the alcohol depleted permeate to the retentate side of a second membrane polishing unit, to provide a second alcohol enriched retentate and a permeate substantially comprising or essentially consisting of water;
   wherein the second alcohol enriched retentate or a fraction of the second alcohol enriched retentate is fed to the retentate side of the first membrane polishing unit of step ii), optionally pre-mixed with the alcohol enriched permeate, or is discharged; and the permeate substantially comprising or essentially consisting of water is fed to the retentate side of the membrane dealcoholization unit of step i), optionally pre-mixed with a supply of deoxygenated water.

Large water consumption is a big challenge in the alcohol-free beverage industry and being able to save as little as 10% may be an attractive business case. According to the invention, and as can be seen in the examples, the water savings are as high as 30 - 85% and even 50 - 95%. This is obtained with same or lower energy consumption and production time compared to the prior art method while the products obtained are same quality in terms of alcohol content. It was found that in order for the overall process to be feasible at least two membrane polishing units were necessary to be able to run the process for a sufficiently short time while obtaining the very large water savings. Thus, compared to using one membrane polishing unit the benefit of using two was significant and non-linear.

It is preferred that the membrane dealcoholization unit and the first and second (or more) membrane polishing units are a reverse osmosis unit as these technologies have proven efficient in filtering or retaining ethanol from beverages without substantial removal of other solutes.

In preferred embodiments the permeate substantially comprising or essentially consisting of water is fed to a buffer tank and the permeate substantially comprising or essentially consisting of water is fed from the buffer tank to the retentate side of the membrane dealcoholization unit of step i). This intermediate buffer tank is particularly useful in batch processes where the amount of water in the permeate flow varies over time. Thus, in a batch process, the amount of permeate water generated in the starting phase is relatively low. Towards the end of the dealcoholization process, the polished permeate will substitute a larger part of the demand for external water..

In further preferred embodiments the solution fed to the dealcoholizing unit, such as a beverage product, comprising alcohol, in step i) is subjected to a preconcentration step, and wherein the preconcentration permeate generated, is fed to the buffer tank, preferably the preconcentration permeate is polished. Collecting the preconcentration permeate in the buffer tank was found to be an important source of water savings during the initial phase of the diafiltration part of the dealcoholization process. Thus, in addition to providing flexibility, the holding tank may also serve as a means for saving more water in the overall process. The permeate may be fed to the buffer tank either through the permeate flow path through the at least two polishing units or via a separate flow. It preferably follows the permeate flow path.

In a preferred process the beverage product is fed at a temperature at or below 25 °C. Temperature influences the efficiency of the filtration and it is desired to minimize the energy spent in cooling the liquids, it is therefore a balance. Further, it is preferred that the alcohol enriched permeate obtained in step i) is cooled to a temperature in the range of -5 to 15 °C to provide a cooled alcohol enriched permeate which is fed to the first membrane polishing unit in step ii).

In presently preferred embodiments the alcohol reduced solution obtained in step i) is recovered and sold and/or the alcohol enriched retentate obtained in step ii) is used as alcohol base in an alcoholized solution. More preferred both the alcohol reduced solution and the alcohol enriched retentate are or can be incorporated into commercial products.

According to preferred embodiments the solution is a beverage wherein the alcohol content of the dealcoholized beverage is 0.5 % abv or below, preferably < 0.5 % abv, more preferably < 0.05 % abv.

It is further contemplated that the second alcohol enriched retentate or a fraction of the second alcohol enriched retentate is fed to the retentate side of the first membrane polishing unit of step ii) during operation, optionally pre-mixed with the alcohol enriched permeate. This will further increase the amount of clean water for recirculation and collection of alcohol in the water. In this embodiment however, the second alcohol enriched retentate fraction may be discharged from the method and used for other purposes during start-up and/or at the end of a batch operation of the method.

According to presently preferred embodiments the mode of operation is batch. Batch operation is typically used when working with beverages and also batch operation is a mode of operation that appears to benefit the most from the flexible set up in terms of water saving.

In further embodiments of the invention where the operation is batch mode the permeate comprising or essentially consisting of water is fed to the top section of the tank and the permeate comprising or essentially consisting of water which is fed to the membrane dealcoholization unit is taken from the lower section of the tank. It is preferred that the buffer tank is configured to allow the feed to layer such that there is minimal mixing whereby the holding time in the tank is substantially the same for any portion of the feed throughout the batch process. As the early stages of the permeate water has the highest alcohol content having a first in first out construction will speed up and improve efficiency of the dealcoholization process.

In a presently preferred embodiment, the system and method consist of two membrane polishing units. This construction has proven to allow for both time and energy efficient generation of a large amount of clean water that may be used for recirculation.

### Brief Description of Drawings

In the following description embodiments of the invention will be described with reference to the schematic drawings, in which:
Fig. 1 shows an overview of an embodiment of a system according to the invention.
Fig. 2 shows an overview of another embodiment of a system according to the invention.
Fig. 3 shows an overview of an embodiment of a system according to the invention in its most general sense.

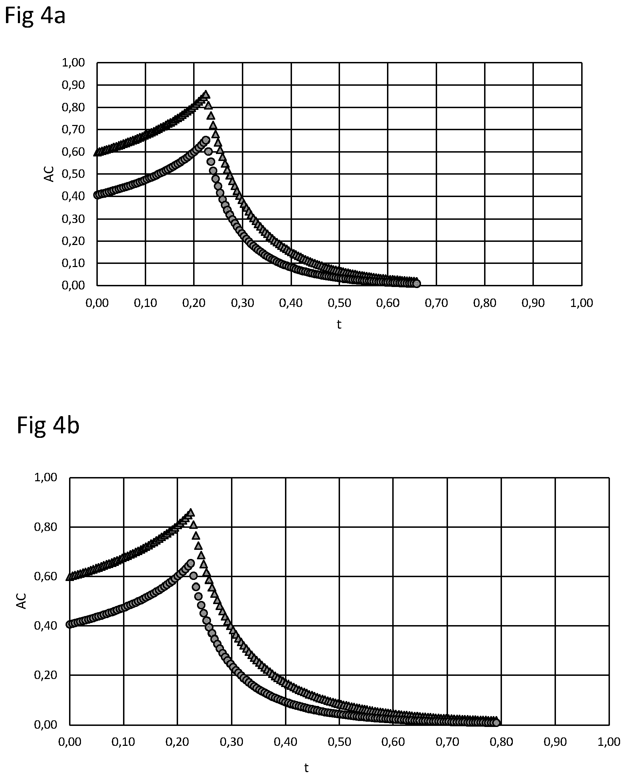

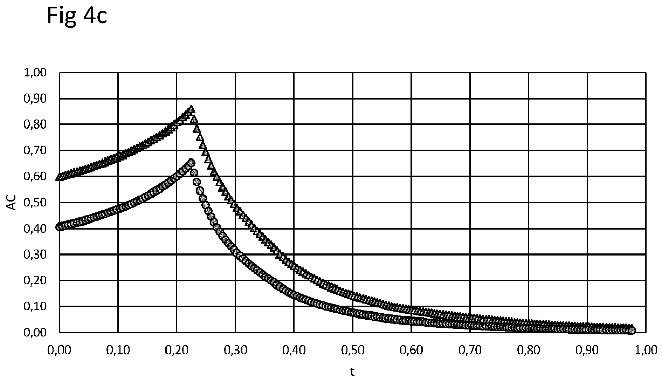

Figs. 4a, 4b and 4c show in figure 4a normalized processing time (t) of a dealcoholization process without recirculation of process water, figure 4b shows the same with the introduction of recirculation of polished permeate using two polishing units, and figure 4c shows the same with the introduction of recirculation of polished permeate using one polishing unit. In all graphs the upper line is the amount of alcohol in the beverage, shown with triangles, and the lower line is the amount of alcohol in the alcohol enriched permeate over time (i.e., corresponding to p2), shown with circles. The x axis shows normalized time units, t, and the y axis shows the normalized alcohol content, AC.
Figs. 5a, 5b, 5c and 5d show the use of external water and recirculated permeate flow with and without a buffer tank. In figure 5a, the supply of external water is shown over time. In figures, 5b, 5c and 5d, the upper line is the recycled polished permeate, shown as triangles, and the lower line is the external water supply, shown with circles.

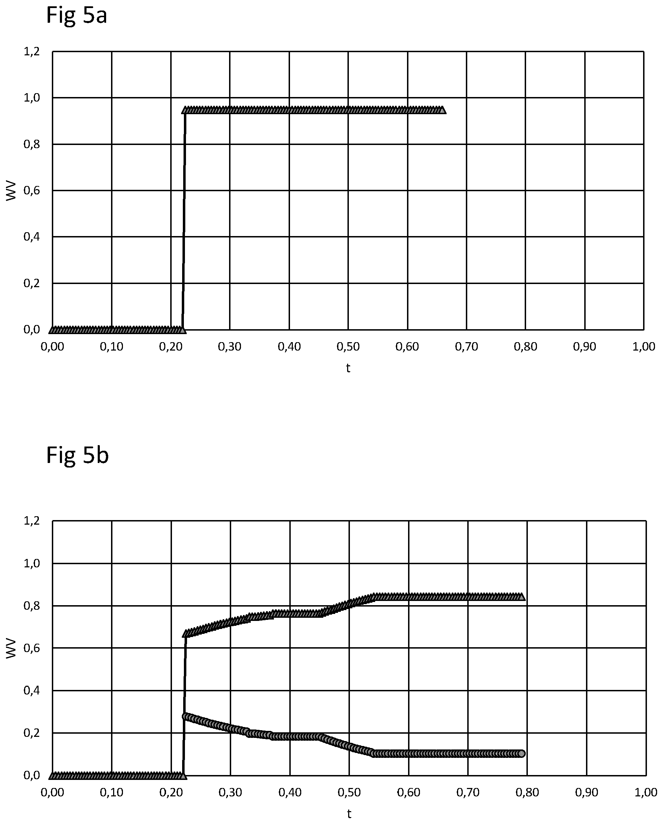

The sum of the upper and lower lines corresponds to the supply of external water in figure 5a. The x axis' show normalized time units, t, and the y axis' show the normalized water volume supplied, WV.

### Detailed description

According to the invention both the dealcoholization and membrane polishing units are membrane units having semipermeable membranes.

The semipermeable membranes according to the invention are of a nature that allows water and alcohol to pass through and, as such, essential ingredients that comprise for example aroma, color and other components that cause turbidity are predominantly retained. Suitable semipermeable membranes for use in the polishing units are reverse osmosis or nanofiltration membranes usable according to the invention and are standard thin-film polymer membranes, such as Filmtec^{™} membranes obtainable from DOW, Hydranautics membranes of the ESP series, such as ESPA4-DL, Turboclean RO membranes from Trisep, such as RO ACM2-46, Fluid Systems^{®} from Koch Separation Solutions, such as TFC SR200/400/34 or RO membranes from LG Chem, LG BW440 UES.

Suitable semipermeable membranes for use in the dealcoholization units are reverse osmosis or nanofiltration membranes usable according to the invention and are standard thin-film polymer membranes, such as Filmtec^{™} membranes of the TW type obtainable from DOW, Hydranautics membranes of the CP or SanRO series, RO membranes from LG Chem, GEA AromaPlus or TML membranes from Toray. Such membranes have a higher chemical resistance than cellulose acetate membranes originally used for membrane dealcoholization.

The typical permeation of membranes usable according to the invention have a salt rejection of minimum 80% when using standard test conditions such as testing at 32,000 ppm NaCI, 5 ppm Boron, 800 psi (5.5 MPa), 25 °C, pH 8 and 8% recovery.

According to the invention a solution is preferably an alcoholized beverage, and consequently in these embodiments the alcohol is ethanol. An alcoholized beverage may be selected from but not limited to beer, wine, liqueur, sparkling wine, cider, spirits, like gin and whisky, fermented drinks like kvass and kombucha. In preferred embodiments the beverage is beer, wine or cider as these beverages are produced at the highest volumes.

According to the invention external water is deoxygenated water, such as deoxygenated brew water. The production and use of deoxygenated water is common knowledge for the skilled person. The oxygen level depends on the specific needs of the products and business requirements and providing this is within the common knowledge. The raw water for deoxygenation is in some embodiments softened or preferably demineralized water.

According to the invention the terms retentate and concentrate should be understood as having the same meaning.

As is known in the art membrane dealcoholization processes typically first include a preconcentration phase followed by the diafiltration process where the permeate fractions comprise water and alcohol and trace amounts of other components of the solution.

The system and method of the invention may be operated both as batch and continuous process. Preferred is a batch process.

According to embodiments of the invention reverse osmosis in the dealcoholization section operates at filtration temperatures of approximately 0 to 50 °C, presenting no thermal stress to the solution or beverage to be treated. Preferably the temperature is at or below 25 °C, preferably 10 to 20 °C. The pressure in the dealcoholization process has an operating pressure in the range of 10 to 45 bar, preferably 15 to 36 bar. It is preferred that the alcohol is ethanol even though the invention should not be limited thereto.

According to embodiments of the invention reverse osmosis in the polishing section operates at filtration temperatures of approximately - 5 to 15 °C, preferably - 2 to 10 °C, more preferred -1 to 8 °C. The pressure in the polishing section has an operating pressure in the range of 15 to 80 bar, preferably 30 to 60 bar, more preferred, 35 to 55 bar.

If an exemplary batch process has an initial beverage volume of 1000 hL. For the dealcoholization process, the ratio of dealcoholization water to feed is typically 1.5:1 to 4:1 depending on whether the desired alcohol content in the dealcoholized beverage or solution is 0.5 % abv or 0.05 % abv. Hence, with water savings of up to 85 to 95 % as exemplified corresponds to 1,700 to 3,800 hL of water savings for processing 1000 hL.

According to the invention the membrane dealcoholization starts with a preconcentration step without any diafiltration. Typically, the feed is concentrated from 2 to less than 5 times, such as 3 to 4 times.

The permeate from the preconcentration may be fed to the buffer tank, when present, and be used for the initial diafiltration of the feed thereby saving a substantial amount of water in the initial part of the process where a high amount of permeate has not yet been generated. The permeate may be fed to the buffer tank either through the permeate flow path through the at least two polishing units or via a separate flow. It preferably follows the permeate polishing flow path.

The process according to the invention as well as a membrane dealcoholization process without a membrane polishing unit has a duration of around 13 to 15 hours. Introducing full recirculation of permeate only slightly increased the processing time to around 16 hours. Hence, the savings in water and energy by far exceeds the extra time needed for the process. In addition, when including a buffer tank, the water savings are increased since the preconcentration permeate can be used in the initial diafiltration phase. Compared to processes with only one membrane polishing unit it was found that the processing time using two or more membrane polishing units is significantly reduced and comparable to using only external water - hence resulting also in energy savings due to a shorter processing time.

Embodiments of the system and method according to the invention will now described with reference to the figures. The solution to be treated is described as a beverage, but the invention should not be limited to a solution used for consumption.

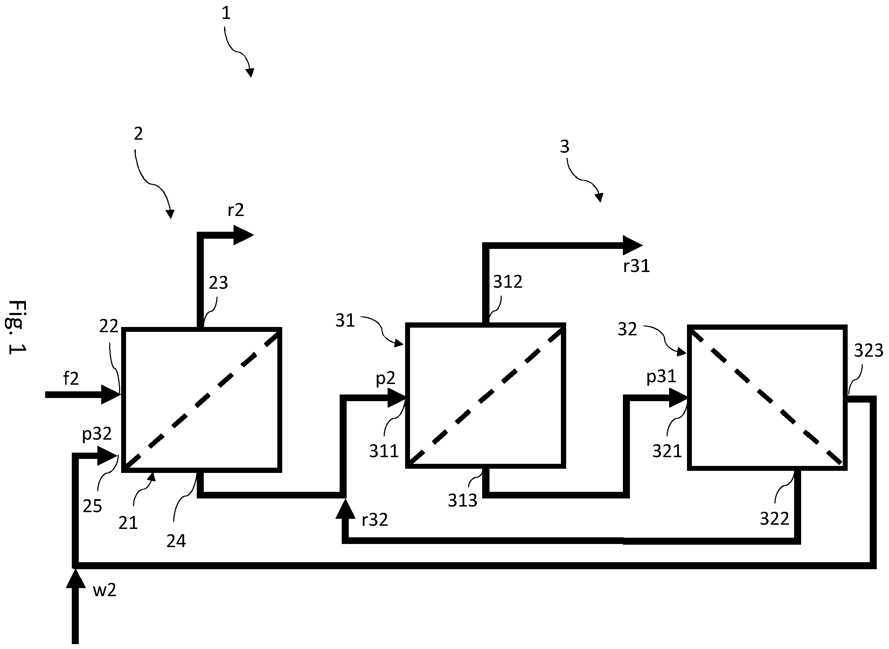

In figure 1 a membrane dealcoholization and water reduction system,1, is shown said system comprising a dealcoholization section, 2, and a polishing section, 3; the dealcoholization section, 2, comprises at least one membrane dealcoholization unit, 21, having a retentate and a permeate side, said membrane dealcoholization unit having a feed inlet, 22, positioned at the retentate side of the membrane dealcoholization unit, a retentate outlet, 23, a permeate outlet, 24, and a water inlet, 25, positioned at the retentate side of the membrane dealcoholization unit.

The membrane dealcoholization unit, 21, is preferably a reverse osmosis unit having a semipermeable membrane allowing water and alcohol to pass, while retaining other solutes of the beverage thus providing a dealcoholized beverage having a desired taste and mouthfeel. The starting abv of the feed can be up to 20% to 40%, typically it is 3% abv to 15% abv, most often 3.5 to 8% abv, but it may be higher or lower. It is contemplated that the feed, f2, may be fed from a buffer tank (not shown).

The target abv of the dealcoholized beverage is typically, is < 0.5 % abv, preferably < 0.05 % abv, but can be up to 2.5%. This may be achieved by diluting the alcohol reduced solution leaving the dealcoholizing unit to the desired level.

The at least one membrane dealcoholization unit, 21, is configured to allow for an operating pressure in the range of 10 to 45 bar, preferably 15 to 36 bar, and further having a temperature control means allowing for a temperature at or below 25 °C, preferably 10 to 20 °C. Suitable units are GEA AromaPlus Membrane dealcoholization unit available from GEA. The treatment in the membrane dealcoholization unit, 21, provides an alcohol reduced solution, r2, and an alcohol containing permeate, p2. The alcohol reduced solution, r2, will typically have an alcohol content below 0.5% abv, preferably below 0.05% abv. The major part of the alcohol of the feed, f2, leaves the membrane dealcoholization unit, 21, in the alcohol containing permeate, p2. The relative alcohol content in the permeate is low due to the high volume of water used, typically around 0.025 % abv.

The polishing section, 3, comprises at least two membrane polishing units, 31 and 32, each having a retentate and a permeate side, in which a first membrane polishing unit, 31, has an inlet, 311, positioned at the retentate side of the unit, a retentate outlet, 312, and a permeate outlet, 313, and in which a second membrane polishing unit, 32, has an inlet, 321, positioned at the retentate side of the unit, a retentate outlet, 322, and a permeate outlet, 323. The membrane polishing units, 31 and 32, may be the same type or different, preferable they are of the same type operated under similar conditions. It is however contemplated that they may have different dimensions.

The dealcoholization and membrane polishing units are fluidly connected such that the permeate outlet, 24, of the membrane dealcoholization unit, 21, is connected to the inlet, 311, of the first membrane polishing unit, 31, the permeate outlet, 313, of the first membrane polishing unit, 31, is connected to the inlet, 321, of the second membrane polishing unit, 32, and the retentate outlet, 322, of the second membrane polishing unit, 32, is connected to the inlet, 311, of the first membrane polishing unit, 31, and the permeate outlet, 323, of the second membrane polishing unit, 32, is connected to the water inlet, 25, of the membrane dealcoholization unit, 21. Thus, the second membrane polishing unit does not communicate with the surroundings but is in full circulation with the first membrane polishing unit, 31 and the membrane dealcoholization unit, 21.

External water may be supplied in stream w2 either directly to the membrane dealcoholization unit, 21, through the water inlet, 25 or mixed with the second alcohol depleted permeate, p32.

The at least two membrane polishing units, 31 and 32, are in the embodiment shown reverse osmosis units. The semipermeable membrane of two membrane polishing units, 31 and 32 are configured to allow water and alcohol to pass whereas other constituents of the solution are essentially retained by the membrane. Examples of membranes include but are not limited to Filmtec membranes from Dow or Dupont, such as Filmtec from Dow, Hydranautics membranes of the ESP series, such as ESPA4-DL, Turboclean RO membranes from Trisep, such as RO 8038-ACM2-46, Fluid Systems^{®} from Koch Separation Solutions, such as TFC SR200 8040-SR200-400-34 or RO membranes from LG Chem, such as LG BW 440 UES.

The units are configured to allow for an operating pressure in the range of 15 to 80 bar, preferably 30 to 60 bar, more preferred, 40 to 55 bar and further having a temperature control means allowing for a temperature of -5 to 15 °C, preferably -2 to 10 °C, more preferred -1 to 8 °C.

In the first membrane polishing unit a first concentration of alcohol takes place, and the alcohol enriched retentate, r31, is drawn from the polisher, 31, and is in preferred embodiments used as is or as an alcohol base for other products, including beverages such as Hard Seltzers, including beverages such as flavored alcoholic beverages (FAB) or neutral malt-based beverages (NMB). The alcohol enriched retentate may have an alcohol content of up to 25% abv. The alcohol depleted permeate, p31, is further depleted from alcohol in the second polisher, 32.

In terms of flow, the flow of the alcohol containing permeate, p2 is considered 100%. Relative hereto, the flowrate of the alcohol depleted permeate, p31, of the first membrane polishing unit comprises at least 10% of the flow of the alcohol containing permeate, p2, for example 10 to 85 to 98 %, and the alcohol enriched retentate, r31, comprises at least 2% of the flow of the alcohol containing permeate, p2, for example 2 to 65 to 90 %. The alcohol enriched retentate, r31, has an alcohol content of up to 25% abv whereas the alcohol depleted permeate, p31, has an alcohol content of above 0 to 12 % abv.

In the second polisher, 32, the alcohol depleted permeate, p31, of the first membrane polishing unit, 31, is further depleted from alcohol to provide a second alcohol enriched retentate, r32, and a permeate, p32. The second alcohol enriched retentate, r32, comprises at least 2% of the flowrate of the alcohol containing permeate, p2, for example 2 to 50 to 95%, and the flowrate of the second alcohol depleted permeate, p32, of the second membrane polishing unit comprises at least 5 % of the flowrate of the alcohol containing permeate, p2, for example 5 to 85 to 98. The second alcohol enriched retentate, r32, has an alcohol content of up to 15% abv whereas the alcohol depleted permeate, p32, has an alcohol content of 0 to 10% abv

The second alcohol enriched retentate or a fraction thereof can in the embodiment shown be fed to the retentate side of the first membrane polishing unit, 31, during operation, it may be fed directly to the membrane polishing unit in a separate feed inlet or be pre-mixed with the alcohol enriched permeate, p2. Thereby further alcohol is captured and the amount on waste is further reduced. During start-up and/or at the end of a batch operation of the method, the fraction is typically discharged from the method and system and used for other purposes since the amount of alcohol in the permeate, p2, has not been built up.

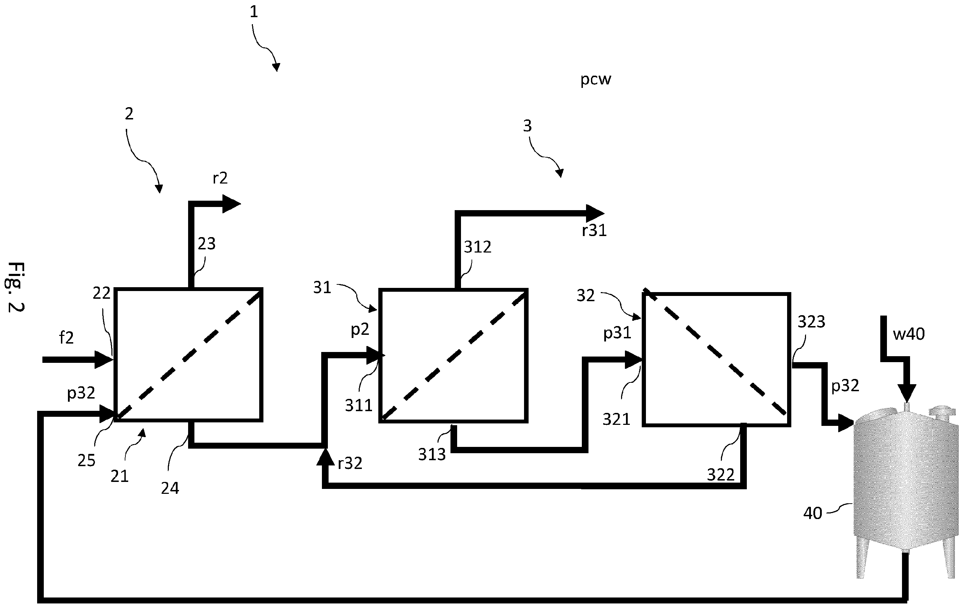

With reference to figure 2 a further embodiment is shown in which all units and streams are the same as described for figure 1 but where the permeate outlet, 323, of the second membrane polishing unit, 32, is connected to the water inlet, 25, of the membrane dealcoholization unit, 21, via an intermediate buffer tank, 40. In embodiments preconcentration permeate from the dealcoholization section may be directed to the buffer tank, and be used as a means for water supply in the initial phase of the diafiltration part of the dealcoholization. The presence of the buffer tank is thus an important source of optimizing the water saving during the process by providing flexibility in the water flows during the stages of the dealcoholization process, in particular for a batch process.

In variations of the embodiment of figure 2 it is contemplated that during processing the flows can be redirected - intermittently - in various ways in order to maintain the required high pressure and sufficient flow throughout the process especially in the beginning and end of a batch and thereby ensuring an efficient diafiltration.

Thus, in one variation it is contemplated that water from the buffer tank is fed to the retentate side, 321, of the second polisher, 32, optionally premixed with the first dealcoholized permeate, p31.

In another variation the permeate or a portion of the permeate p32 is circulated back to the retentate side, 321, of the second polisher, 32, optionally premixed with the first dealcoholized permeate, p31.

In yet a variation a portion of the first dealcoholized permeate, p31, is circulated back to the retentate side, 311, of the first polisher, 31, optionally premixed with the alcohol enriched permeate. In yet a variation, a portion of the first dealcoholized permeate, p31, is circulated back to the retentate side, 311, of the first polisher, 31, water from the buffer tank, 40, is fed to the retentate side, 321, of the second polisher, 32, optionally premixed with the first dealcoholized permeate, p31.

In configurations with three or more polishers, (33, 34...), (not shown) the polishers are connected such that the permeate outlet of polisher n is fluidly connected to the inlet of polisher n+1. The permeate outlet of the last polisher is then recirculated and connected to the water inlet of the membrane dealcoholization unit. The retentate outlet of the subsequent membrane polishing units are either recirculated to one of the inlets of one of the previous membrane polishing units (31, 32, etc.) or mixed with the alcohol enriched retentate (r31).

Having more than two membrane polishing units will further shorten the total processing time. The alcohol concentration which can be achieved from the first polisher will also be higher as the retentate volumes are lower.

The need for external water supply may also be reduced but only marginally, since using two polishers was surprisingly found to be close to the limit of water recovery possible.

Hence in preferred embodiments three or more membrane polishing units are used, when processing time is important.

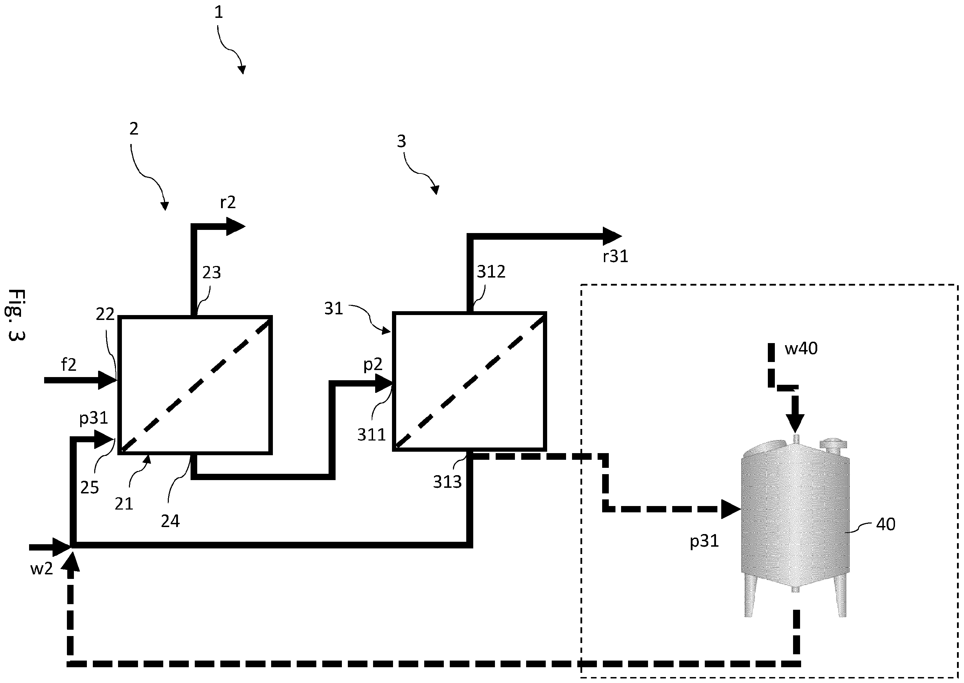

With reference to figure 3, the system of the invention will be described in its most general aspect where the invention relates to a dealcoholization and water reduction system, 1, said system comprising a membrane dealcoholization section, 2, and a polishing section, 3; in which the dealcoholization section, 2, comprises at least one membrane dealcoholization unit, 21, having a retentate and a permeate side, said membrane dealcoholization unit having a feed inlet, 22, positioned at the retentate side of the membrane dealcoholization unit, a retentate outlet, 23, a permeate outlet, 24, and a water inlet, 25, positioned at the retentate side of the membrane dealcoholization unit;
wherein the polishing section, 3, comprises at least one membrane polishing unit, 31, having a retentate and a permeate side, in which the at least one membrane polishing unit, 31, has an inlet, 311, positioned at the retentate side of the unit, a retentate outlet, 312, and a permeate outlet, 313,
wherein the permeate outlet, 24, of the membrane dealcoholization unit, 21, is connected to the inlet, 311 of the membrane polishing unit, 31, the permeate outlet, 313, of the first membrane polishing unit, 31, is connected to the water inlet, 25, of the membrane dealcoholization unit, 21, optionally through an intermediate buffer tank, 40. When operating with one membrane polishing unit at certain conditions, the dealcoholization time and recirculation ratio was surprisingly better than the prior art. Such a process with at least one polisher, can provide a permeate water stream that can be used to replace external water. The processing time is longer than using only external water or at least two polishers.

In all variations of the embodiments described it is contemplated that any of the effluent product streams may be further concentrated by way of evaporation, distillation, freeze concentration or other methods used in the art for concentrating a liquid. Similarly, it is contemplated that the product streams may be diluted to a desired percentage of solute concentration.

All equipment and piping are standard equipment used in the art and the skilled person will be familiar herewith.

### Examples

### Example 1 - duration of dealcoholization processes

Figure 4 illustrates a dealcoholization process without reuse of water (4a), with recirculation according to the invention with two membrane polishing units (4b) and with recirculation according using one membrane polishing unit (4c). In all the figures the upper line shows the alcohol content in the beverage to be dealcoholized, whereas the lower line shows the alcohol content in the alcohol enriched permeate (corresponding to p2).

A batch dealcoholization was simulated using a GEA proprietary simulation program. Similar simulations can be made using commercially available software such as Matlab, Chemcad or Aspen. The batch was tested with a typical high density beer product (i.e., initial abv around 7%). The initial beer volume was for this example set to 100000 liters (1000 hl). The dealcoholization process is initiated with a preconcentration around 3.5 times before the actual diafiltration starts. In the first experiment dealcoholization was performed using pure water for comparison and in the second the process was according to the invention with two polishers. As can be seen from the graphs of figures 4a and 4b, the duration of the processes is substantially the same. The process according to the invention is marginally longer. It is however a good trade for being able to recycle water from the process itself. As is known the speed of the filtration is highly dependent on the solute concentration. Hence, it was unexpected that the duration of the processes was almost the same even though the method of the invention recirculates water with traces of solutes. A few solutes originating from the beverage itself and trace amounts of alcohol will inevitably be present in the permeates.

Finally, and to further compare two versus one polisher, as shown in figure 4c an experiment was made with one polisher but same conditions otherwise. Here it can be seen that the duration of the process was over 20% longer when using same conditions.

### Example 2 - Illustration of the water usage according to the invention with and without using a buffer tank.

According to embodiments of the invention as illustrated in figures 2 and 3, the effect on the water usage is illustrated below including using a buffer tank which is presently preferred after the polishing unit(s) for intermediate storage of permeate water. The processes were simulated as detailed under example 1 and specifically the preconcentration phase proceeded until the feed had been concentrated 3.5 times.

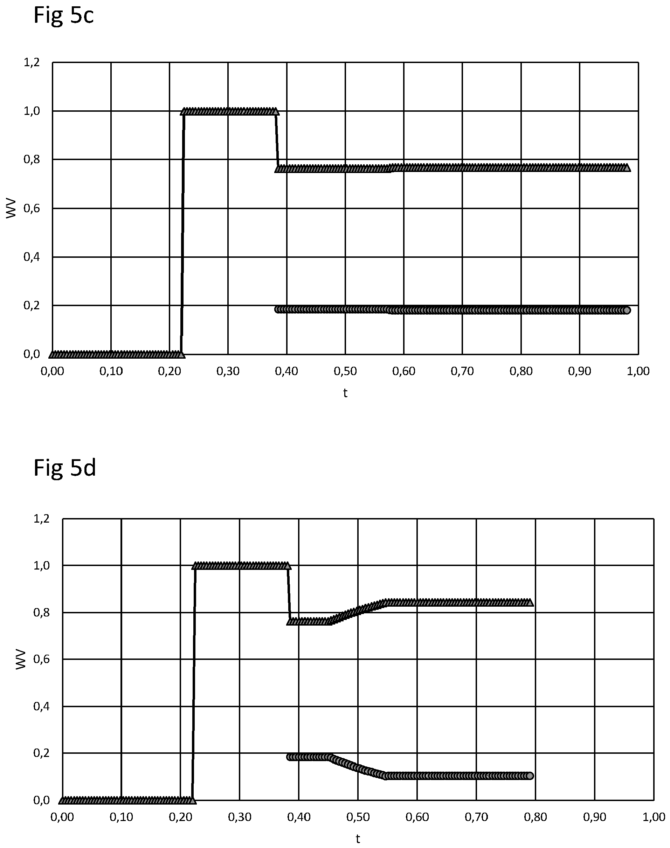

The supply of water to the process is illustrated in figures 5a, b, c and d, showing embodiments:
5a without polisher and buffer tank;
5b with two polishing units but without a buffer tank;
5c with one polishing unit and a buffer tank; and
5d with two polishing units and a buffer tank.

As mentioned above in figure 5a the graph shows the supply of external water. In figures 5b to 5d, the upper lines show the supply of polished permeate in triangles and the lower lines show the supply of external water as circles.

Referring now to figure 5a, as can be seen, in the beginning, around 1/3 of the time, of the process, no external water was supplied, this is the preconcentration phase of the dealcoholization process. After the preconcentration phase, external water was fed to the dealcoholization unit in order to provide the dealcoholized beverage. Processing time stopped at around 0.65 time units, and the water volume was around 0.95 per time unit from 0.22 to the end. This figure illustrates prior art.

In figure 5b the process is shown with two polishing units and without a buffer tank. The process followed the same path and need for water supply. Hence, it can be seen that also at around time unit 0.22 after the preconcentration phase water from the second polisher and external water was fed to the dealcoholization unit. External water volume at around 0.3 in the initial time units, declining to a water volume of around 0.1 at around 0.55 time units. The remaining part up to around 0.95 water volume was recycled polished permeate.

Hence, as can be seen the processing time with two polishing units is a little longer, but the need for external water supply decreases, here from 0.95 volume units to 0.3 to 0.1 volume units. A significant saving in the need for external water.

In figure 5c the process is shown with one polishing unit and with a buffer tank. The process followed the same path and need for water supply as above. Hence, it can be seen that also at around time unit 0.22 after the preconcentration phase water was fed to the dealcoholization unit. However, given that the preconcentration water had been collected, the need for external water supply at time unit 0.22 to 0.375 was completely moot. Only at a time unit just before 0.4 was there a need for around 0.2 volume units external water and combined with the 0.75 volume units from the polishing unit, the total need was met.

Hence, as can be seen the processing time with one polishing unit and a buffer tank was around 50% longer than with no polishing units or buffer tank and around 20% longer with two polishing units and a buffer tank, thus resulting in around 25% prolonged processing time comparing one with two polishing units. However, the total need for external water supply decreased compared to the embodiment with no polishing units which is further facilitated by the presence of the buffer tank. Hence, while allowing for a longer processing time the external water saving is significant.

Turning now to figure 5d the process is shown with two polishing units and with a buffer tank. The process followed the same path and need for water supply as above. Hence, it can be seen that also at around time unit 0.22 after the preconcentration phase, water was fed to the dealcoholization unit. However, given that the preconcentration water had been collected the need for external water supply at time unit 0.22 to 0.375 was completely moot. Only at a time unit just before 0.4 was there a need for around 0.2 volume units external water which further reduced to around 0.1 volume units at around 0.55 time units and onwards and combined with the 0.75 volume units to 0.85 volume units from the polishing unit the total need was met.

Hence, as can be seen the processing time with two polishing units and a buffer tank was around 20% longer than with no polishing units, however, the total need for external water supply decreased significantly compared to all the embodiments shown.

Hence, it can be seen that the systems and methods of the invention allow for significant water savings. It can also be seen that the lowest demand for external water is in embodiments with at least two polishing units and where there is a buffer tank to which preconcentration water is fed.

### Example 3 - illustration of total energy consumption comparing variations with one and two membrane polishing units

**Table 1 - membrane dealcoholization unit with one polishing unit**

| Pump energy | kW | 5.181 | 100% |
|---|---|---|---|
| Cooling energy | kW | 10.318 | 100% |
| Deox. Water | hl | 787 | 100% |

**Table 2 - membrane dealcoholization unit with two polishing units**

| Pump energy | kW | 5.091 | 98% |
|---|---|---|---|
| Cooling energy | kW | 9.202 | 89% |
| Deox. Water | hl | 470 | 60% |

As can be seen from the tables the cooling energy of having two membrane polishing units decreases compared to the variation with one polisher. The saving in energy is mostly assigned to the shorter processing time. Hence, with two or more polishers the saving in energy will be significant compared to one.

Thus, in addition to a significant water saving embodiments of the present invention also provides a more energy efficient solution.

## Claims

1. A membrane dealcoholization and water reduction system (1) said system comprising a dealcoholization section (2) and a polishing section (3); in which the dealcoholization section (2) comprises at least one membrane dealcoholization unit (21) having a retentate and a permeate side, said membrane dealcoholization unit having a feed inlet (22) positioned at the retentate side of the membrane dealcoholization unit, a retentate outlet (23), a permeate outlet (24) and a water inlet (25) positioned at the retentate side of the membrane dealcoholization unit;
wherein the polishing section (3) comprises at least two membrane polishing units (31, 32), each having a retentate and a permeate side, in which a first membrane polishing unit (31) has an inlet (311) positioned at the retentate side of the unit, a retentate outlet (312) and a permeate outlet (313), and in which a second membrane polishing unit (32) has an inlet (321) positioned at the retentate side of the unit, a retentate outlet (322) and a permeate outlet (323); and
wherein the permeate outlet (24) of the membrane dealcoholization unit (21) is connected to the inlet (311) of the first membrane polishing unit (31), the permeate outlet (313) of the first membrane polishing unit (31) is connected to the inlet (321) of the second membrane polishing unit (32), and wherein the retentate outlet (322) of the second membrane polishing unit (32) is connected to the inlet (311) of the first membrane polishing unit (31), and the permeate outlet (323) of the second membrane polishing unit (32) is connected to the water inlet (25) of the membrane dealcoholization unit (21).

2. A membrane dealcoholization and water reduction system according to claim 1, wherein the at least two membrane polishing units (31,32) are reverse osmosis units.

3. A membrane dealcoholization and water reduction system according to claim 2, wherein the at least two membrane polishing units (31,32) have a semipermeable membrane allowing water and alcohol to pass and wherein the units are configured to allow for an operating pressure in the range of 15 to 80 bar, preferably 30 to 60 bar, more preferred, 40 to 55 bar and further having a temperature control means allowing for a temperature of -5 to 15 °C, preferably -2 to 10 °C, more preferred -1 to 8 °C.

4. A membrane dealcoholization and water reduction system according to any one of claims 1 to 3, wherein the membrane dealcoholization unit (21) is a reverse osmosis unit having a semipermeable membrane allowing water and alcohol to pass, and optionally wherein the unit is configured to allow an operating pressure in the range of 10 to 45 bar, preferably 15 to 36 bar, and further having a temperature control means allowing for a temperature at or below 25 °C, preferably 10 to 20 °C.

5. A membrane dealcoholization and water reduction system according to claim 4, wherein the permeate outlet (323) of the second membrane polishing unit (32) is connected to the water inlet (25) of the membrane dealcoholization unit (21) directly and/or via an intermediate buffer tank (40).

6. A polishing section (3) for use in a membrane dealcoholization and water reduction process, said polishing section (3) comprises at least two membrane polishing units (31,32), where a first membrane polishing unit (31) has an inlet (311) positioned at the retentate side of the unit, a retentate outlet (312) and a permeate outlet (313), and where a second membrane polishing unit (32) has an inlet (321) positioned at the retentate side of the unit, a retentate outlet (322) and a permeate outlet (323);
wherein the inlet of the first membrane polishing unit (311) is configured to be connected to a permeate outlet (24) of a membrane dealcoholization unit (21), and
wherein the permeate outlet (313) of the first membrane polishing unit (31) is connected to the inlet (321) of the second membrane polishing unit (32), and wherein the retentate outlet (322) of the second membrane polishing unit (32) is connected to the inlet (311) of the first membrane polishing unit (31), and the permeate outlet (323) of the second membrane polishing unit (32) is configured to be connected to a water inlet (25) of a membrane dealcoholization unit (21).

7. A method for reducing water consumption in a membrane dealcoholization process, said method comprising the steps of
i) feeding a solution, such as a beverage product, (f2) comprising alcohol to a membrane dealcoholization unit (21) to provide an alcohol reduced solution (r2) and an alcohol containing permeate (p2);
ii) feeding the alcohol containing permeate (p2) obtained in step i) to the retentate side of a first membrane polishing unit (31) to provide an alcohol enriched retentate (r31) and an alcohol depleted permeate (p31);
iii) feeding the alcohol depleted permeate (p31) to the retentate side of a second membrane polishing unit (32), to provide a second alcohol enriched retentate (r32) and a permeate (p32) substantially comprising or essentially consisting of water;
wherein the second alcohol enriched retentate (r32) or a fraction of the second alcohol enriched retentate (r32) is fed to the retentate side of the first membrane polishing unit (31) of step ii), optionally pre-mixed with the alcohol enriched permeate (p2), or is discharged; and the permeate substantially comprising or essentially consisting of water (p32) is fed to the retentate side of the membrane dealcoholization unit (21) of step i), optionally pre-mixed with a supply of external water (w2, w40).

8. A method for reducing water consumption in a membrane dealcoholization process according to claim 7, wherein the membrane dealcoholization unit (21) and the first and second membrane polishing units (31, 32) are a reverse osmosis unit.

9. A method for reducing water consumption in a membrane dealcoholization process according to claim 7 or 8, wherein the permeate (p32) substantially comprising or essentially consisting of water is fed to a buffer tank (40) and wherein the permeate (p32) substantially comprising or essentially consisting of water is fed from the buffer tank (40) to the retentate side of the membrane dealcoholization unit (21) of step i).

10. A method for reducing water consumption in a membrane dealcoholization process according to claim 9, wherein the solution, such as a beverage product, (f2) comprising alcohol, in step i) is subjected to a preconcentration step, and wherein the preconcentration water (pcw) generated is fed to the buffer tank (40), preferably through the at least two polishing units (31,32).

11. A method for reducing water consumption in a membrane dealcoholization process according to any one of claims 7 to 10, wherein the beverage product (f2) is fed at a temperature at or below 25 °C and/or wherein the alcohol enriched permeate (p2) obtained in step i) is cooled to a temperature in the range of -5 to 15 °C to provide a cooled alcohol enriched permeate (p2) which is fed to the first membrane polishing unit (31) in step ii).

12. A method for reducing water consumption in a membrane dealcoholization process according to any one of claims 7 to 11, wherein the alcohol reduced solution (r2) obtained in step i) is recovered and sold and/or wherein the alcohol enriched retentate (r31) obtained in step ii) is used as is or as alcohol base in an alcoholized solution.

13. A method according for reducing water consumption in a membrane dealcoholization process according to any one of claims 7 to 12, wherein the solution is a beverage, and wherein the alcohol content of the dealcoholized beverage (23) is < 0.5 % abv, preferably < 0.05 % abv.

14. A method for reducing water consumption in a membrane dealcoholization process according to any one of claims 7 to 13, wherein the second alcohol enriched retentate (r32) or a fraction of the second alcohol enriched retentate (r32) is fed to the retentate side of the first membrane polishing unit (31) of step ii) during operation, optionally pre-mixed with the alcohol enriched permeate (p2), and is discharged from the method and used for other purposes during start-up and/or at the end of a batch operation of the method.

15. A method and system according to any of the previous claims, wherein the mode of operation is batch.

16. A method and system according to any of the previous claims, wherein the operation is batch mode and wherein the permeate (p32) substantially comprising or essentially consisting of water is fed to the top section of the tank (40) and the permeate (p32) substantially comprising or essentially consisting of water which is fed to the membrane dealcoholization unit (21) is taken from the lower section of the tank (40) and further wherein the buffer tank is configured to allow the feed to layer such that there is minimal mixing whereby the holding time in the tank is substantially the same for any portion of the feed throughout the batch process.
